(19) Europäisches Patentamt / European Patent Office / Office européen des brevets

(11) **EP 4 741 430 A2**

(12) **EUROPEAN PATENT APPLICATION**

(43) Date of publication:
**13.05.2026   Bulletin 2026/20**

(51) International Patent Classification (IPC):
***C08F 290/06*** (2006.01)

(21) Application number: 26168178.7

(22) Date of filing: **12.08.2022**

(52) Cooperative Patent Classification (CPC):
(C-Sets available)
**C08F 2/48; B29C 64/124; B33Y 10/00; B33Y 70/00; C08F 290/067;** G01N 2203/0298        (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **21.09.2021   JP 2021153498**

(62) Document number(s) of the earlier application(s) in accordance with Art. 76 EPC:
**22190136.6 / 4 151 664**

(71) Applicant: **Sumitomo Rubber Industries, Ltd.**
**Kobe-shi, Hyogo 651-0072 (JP)**

(72) Inventors:
- **KURODA, Kenichi**
  **Kobe-shi, Hyogo, 651-0072 (JP)**
- **FUJIWARA, Takahiro**
  **Kobe-shi, Hyogo, 651-0072 (JP)**

(74) Representative: **Manitz Finsterwald**
**Patent- und Rechtsanwaltspartnerschaft mbB**
**Martin-Greif-Straße 1**
**80336 München (DE)**

Remarks:
This application was filed on 26-03-2026 as a divisional application to the application mentioned under INID code 62.

(54) **PHOTOCURABLE COMPOSITION AND SHAPED PRODUCT FORMED FROM THE SAME**

(57)     An object of the present invention is to provide a photocurable composition from which a molded product having excellent mechanical properties is obtained. The present invention provides a photocurable composition containing a urethane (meth)acrylate oligomer and a vinyl monomer, wherein the vinyl monomer includes a first monomer having a glass transition temperature (Tg) of -100 °C or more and 20 °C or less, and a second monomer having a glass transition temperature (Tg) of more than 20 °C and 150 °C or less, an amount of the urethane (meth)acrylate oligomer ranges from 20 mass % to 80 mass %, an amount of the first monomer ranges from 15 mass % to 75 mass %, an amount of the second monomer ranges from 5 mass % to 65 mass %, and a total amount of the urethane (meth)acrylate oligomer and the vinyl monomer is 100 mass %.

EP 4 741 430 A2

(52) Cooperative Patent Classification (CPC): (Cont.)

C-Sets
**C08F 290/067, C08F 220/1811, C08F 220/282;**
**C08F 290/067, C08F 220/282, C08F 220/1811;**
**C08F 290/067, C08F 220/282, C08F 222/1065,**
**C08F 220/1811;**
**C08F 290/067, C08F 222/1065, C08F 220/282,**
**C08F 220/1811**

**Description**

**FIELD OF THE INVENTION**

The present invention relates to a photocurable composition, and more specifically relates to a photocurable composition suitable for stereolithography.

**DESCRIPTION OF THE RELATED ART**

In recent years, a three-dimensionally laminating and shaping apparatus (so-called 3D printer) for producing a three-dimensional structure by laminating and curing a resin based on design data of the three-dimensional structure has been put into practical use. As the three-dimensional structure produced by the three-dimensionally laminating and shaping apparatus, a three-dimensional structure made of a resin is well known.

For example, WO 2017/154335 A discloses a rubber composition for three-dimensionally laminating and shaping, wherein the rubber composition comprises a liquid rubber. The rubber composition is suitably used to produce an elastic molded product by the three-dimensionally laminating and shaping apparatus.

JP 2021-75044 A discloses a polymer composition for stereolithography comprising a liquid polymer and a monomer, wherein the polymer composition for stereolithography has a viscosity of 3,000 mPa·s or less as measured using an E type viscometer under conditions of a cone plate diameter: 25 mm and a shear rate: 100 s$^{-1}$ in an environment of a temperature: 25 °C and a relative humidity: 50%.

**SUMMARY OF THE INVENTION**

The cured product of the conventional photocurable composition used for stereolithography does not have adequate mechanical properties. The present invention has been achieved in view of the above circumstances, and an object of the present invention is to provide a photocurable composition providing a shaped product having excellent mechanical properties.

The present invention provides a photocurable composition containing a urethane (meth)acrylate oligomer and a vinyl monomer, wherein the vinyl monomer includes a first monomer having a glass transition temperature (Tg) of -100 °C or more and 20 °C or less, and a second monomer having a glass transition temperature (Tg) of more than 20 °C and 150 °C or less, an amount of the urethane (meth)acrylate oligomer ranges from 20 mass % to 80 mass %, an amount of the first monomer ranges from 15 mass % to 75 mass %, an amount of the second monomer ranges from 5 mass % to 65 mass %, and a total amount of the urethane (meth)acrylate oligomer and the vinyl monomer is 100 mass %.

The cured product (shaped product) obtained by curing the photocurable composition according to the present invention has a low glass transition temperature (Tg), and shows excellent mechanical properties.

The photocurable composition according to the present invention is suitable for stereolithography.

The shaped product formed from the photocurable composition according to the present invention has excellent mechanical strength.

**DESCRIPTION OF THE PREFERRED EMBODIMENT**

The present invention provides a photocurable composition containing a urethane (meth)acrylate oligomer and a vinyl monomer, wherein the vinyl monomer includes a first monomer having a glass transition temperature (Tg) of -100 °C or more and 20 °C or less, and a second monomer having a glass transition temperature (Tg) of more than 20 °C and 150 °C or less, an amount of the urethane (meth)acrylate oligomer ranges from 20 mass % to 80 mass %, an amount of the first monomer ranges from 15 mass % to 75 mass %, an amount of the second monomer ranges from 5 mass % to 65 mass %, and a total amount of the urethane (meth)acrylate oligomer and the vinyl monomer is 100 mass %.

1. Urethane (meth)acrylate oligomer

The urethane (meth)acrylate oligomer is an oligomer having a (meth)acryloyl group and a urethane bond in the molecule. The (meth)acryloyl group means a methacryloyl group and/or an acryloyl group. The oligomer is a molecule of multiple compounds bonded. The oligomer is, for example, preferably a polymer of about 3 to 100 compounds bonded, more preferably a polymer of about 3 to 50 compounds bonded, and even more preferably a polymer of about 3 to 40 compounds bonded.

Examples of the urethane (meth)acrylate oligomer include a product obtained by a reaction between a urethane prepolymer having an isocyanate group and a (meth)acrylate monomer having a hydroxy group; a product obtained by a reaction between a urethane prepolymer having a hydroxy group and a (meth)acrylate monomer having an isocyanate group; and a product obtained by a reaction between a urethane prepolymer having an amino group and a (meth)acrylate monomer having an isocyanate group. In the present invention, the (meth)acrylate means acrylate and/or methacrylate.

The urethane prepolymer is preferably a product formed by a reaction between a polyisocyanate and a polyol. The molecular chain of the urethane prepolymer has a urethane bond formed by the reaction between the polyisocyanate and the polyol. The urethane prepolymer has an isocyanate group or a hydroxy group at the terminal of the molecular chain. In addition, the urethane prepolymer may have an amino group at the terminal of the molecular chain.

The urethane (meth)acrylate oligomer preferably has the polyisocyanate and the polyol deriving from the urethane prepolymer as the constituent component, and may have the polyisocyanate, the polyol and the polyamine deriving from the urethane prepolymer as the constituent component.

Examples of the polyol component constituting the urethane (meth)acrylate oligomer include a low molecular weight polyol having a molecular weight of less than 500, and a high molecular weight polyol having a number average molecular weight of 500 or more.

Examples of the high molecular weight polyol include a polyether polyol, a polyester polyol, a polycaprolactone polyol, a polycarbonate polyol, and an acrylic polyol. Examples of the polyether polyol include polyoxyethylene glycol (PEG), polyoxypropylene glycol (PPG), and polyoxytetramethylene glycol (PTMG). Examples of the polyester polyol include polyethylene adipate (PEA), polybutylene adipate (PBA), and polyhexamethylene adipate (PHMA). Examples of the polycaprolactone polyol include poly-$\varepsilon$-caprolactone (PCL). Examples of the polycarbonate polyol include polyhexamethylenecarbonate. The high molecular weight polyol may be used solely or as a mixture of at least two of them.

The polyol component constituting the urethane (meth)acrylate oligomer preferably includes at least one member selected from the group consisting of the polyether diol, the polyester diol, the polycaprolactone diol, and the polycarbonate diol.

The number average molecular weight of the polyol component constituting the urethane (meth)acrylate oligomer is preferably 300 or more, more preferably 500 or more, and even more preferably 1000 or more, and is preferably 10000 or less, more preferably 8000 or less, and even more preferably 5000 or less. If the number average molecular weight of the polyol component is 500 or more, softness can be imparted to the shaped product obtained by curing the photocurable composition. If the number average molecular weight of the polyol component is 5000 or less, hardness can be imparted to the shaped product obtained by curing the photocurable composition.

The number average molecular weight of the polyol component can be measured, for example, by gel permeation chromatography (GPC), using polystyrene as a standard material, tetrahydrofuran as an eluate, and an organic solvent system GPC column (e.g. "Shodex (registered trademark) KF series" available from Showa Denko K.K.) as a column.

The polyol component may include a low molecular weight polyol having a molecular weight of less than 500. Examples of the low molecular weight polyol include a diol such as ethylene glycol, diethylene glycol, triethylene glycol, 1,3-butanediol, 1,4-butanediol, neopentyl glycol, and 1,6-hexanediol; and a triol such as glycerin, trimethylolpropane, and hexanetriol. The low molecular weight polyol may be used solely or as a mixture of at least two of them.

The polyamine constituting the urethane (meth)acrylate oligomer is not particularly limited, as long as the polyamine has at least two or more amino groups. Examples of the polyamine include an aliphatic polyamine such as ethylene diamine, propylene diamine, butylene diamine, and hexamethylene diamine; an alicyclic polyamine such as isophorone diamine, and piperazine; and an aromatic polyamine.

The aromatic polyamine is not particularly limited, as long as the aromatic polyamine has at least two amino groups directly or indirectly bonding to an aromatic ring. Herein, "indirectly bonding" means the amino group is bonding to the aromatic ring, for example, via a lower alkylene group. The aromatic polyamine may be a monocyclic aromatic polyamine having one aromatic ring having two or more amino groups bonding thereto, or a polycyclic aromatic polyamine including two or more aminophenyl groups having at least one amino group bonding to one aromatic ring.

Examples of the monocyclic aromatic polyamine include a type having amino groups directly bonding to the aromatic ring, such as phenylene diamine, toluene diamine, diethyltoluene diamine, and dimethylthiotoluene diamine; and a type having amino groups bonding to the aromatic ring via a lower alkylene group, such as xylylene diamine. In addition, the polycyclic aromatic polyamine may be a poly(aminobenzene) having at least two aminophenyl groups directly bonding to each other, or alternatively at least two aminophenyl groups may bond to each other via a lower alkylene group or alkylene oxide group. Among them, a diaminodiphenyl alkane having two aminophenyl groups bonding to each other via a lower alkylene group is preferable, and 4,4'-diaminodiphenyl methane and its derivatives are particularly preferable.

Examples of the polyisocyanate component constituting the urethane (meth)acrylate oligomer include a compound having at least two isocyanate groups. Examples of the polyisocyanate include an aromatic polyisocyanate such as 2,4-tolylene diisocyanate, 2,6-tolylene diisocyanate, a mixture of 2,4-tolylene diisocyanate and 2,6-tolylene diisocyanate (TDI), 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylenediisocyanate (TMXDI), and para-phenylene diisocyanate (PPDI); an alicyclic polyisocyanate or aliphatic polyisocyanate such as 4,4'-dicyclohexylmethane diisocyanate ($H_{12}$MDI), hydrogenated xylylenediisocyanate ($H_6$XDI), hexamethylene diisocyanate (HDI), isophorone diisocyanate (IPDI), and norbornene diisocyanate (NBDI); and derivatives of these polyisocyanates. In the present invention, two or more polyisocyanates may be used as the polyisocyanate component.

Examples of the polyisocyanate derivative include an adduct modified product obtained by a reaction between a diisocyanate and a polyhydric alcohol; an isocyanurate modified product of a diisocyanate; a biuret modified product; and an allophanate modified product, and the polyisocyanate derivative from which free diisocyanate has been removed is more preferable.

The adduct modified product is a polyisocyanate obtained by a reaction between a diisocyanate and a polyhydric alcohol. The polyhydric alcohol is preferably a low molecular weight triol such as trimethylolpropane and glycerin. The adduct modified product is preferably a triisocyanate obtained by a reaction between a diisocyanate and trimethylolpropane, or a triisocyanate obtained by a reaction between a diisocyanate and glycerin.

The allophanate modified product is, for example, a triisocyanate obtained by further reacting a diisocyanate with a urethane bond formed by a reaction between a diisocyanate and a low molecular weight diol.

A urethane(meth)acrylic oligomer having a (meth)acryloyl group is obtained, for example, by a reaction between the urethane prepolymer having the isocyanate group at the terminal of the molecular chain and the (meth)acrylate having the hydroxy group. Examples of the (meth)acrylate having the hydroxy group include a hydroxyalkyl (meth)acrylate such as 2-hydroxyethyl (meth)acrylate, 3-hydroxypropyl (meth)acrylate, 2-hydroxypropyl (meth)acrylate, and 4-hydroxybutyl (meth)acrylate.

A urethane(meth)acrylic oligomer having a (meth)acryloyl group is obtained, for example, by a reaction between the urethane prepolymer having the hydroxy group or amino group at the terminal of the molecular chain and the (meth)acrylate having the isocyanate group. Examples of the (meth)acrylate having the isocyanate group include 2-methacryloyloxyethyl isocyanate (trade name "KarenzMOI" available from Showa Denko k.k.), 2-acryloyloxyethyl isocyanate (trade name "KarenzAOI" available from Showa Denko k.k.), and methacryloyloxyethyl isocyanate ethylether (trade name "KarenzMOIEG" available from Showa Denko k.k.).

Examples of the urethane (meth)acrylate oligomer include an aliphatic urethane (meth)acrylate oligomer, and an aromatic urethane (meth)acrylate oligomer. The aliphatic urethane (meth)acrylate oligomer includes an aliphatic compound as the component constituting the urethane (meth)acrylate oligomer, for example, an aliphatic polyisocyanate is used as the constituent component. The aromatic urethane (meth)acrylate oligomer includes an aromatic compound as the component constituting the urethane (meth)acrylate oligomer, for example, an aromatic polyisocyanate is used as the constituent component.

The glass transition temperature (Tg) of the urethane (meth)acrylate oligomer is not particularly limited, and is preferably -100 °C or more, more preferably -90 °C or more, and even more preferably -80 °C or more, and is preferably 50 °C or less, more preferably 10 °C or less, even more preferably -20 °C or less, and most preferably -50 °C or less. If the glass transition temperature of the urethane (meth)acrylate oligomer falls within the above range, a mechanical strength can be imparted to the shaped product obtained by curing the photocurable composition while suppressing increase in the glass transition temperature (Tg) of the shaped product.

The urethane (meth)acrylate oligomer preferably has 2 or more (meth)acryloyl groups in the molecule. The number of (meth)acryloyl group in one molecule is not particularly limited, and is preferably 2 or more, and is preferably 10 or less, more preferably 4 or less.

The number average molecular weight of the urethane (meth)acrylate oligomer is preferably 300 or more, more preferably 1000 or more, and even more preferably 3000 or more, and is preferably 30000 or less, more preferably 20000 or less, and even more preferably 15000 or less. If the number average molecular weight of the urethane (meth)acrylate oligomer falls within the above range, the processability in the stereolithography is better, and the shaped product obtained by curing the photocurable composition is excellent in curing shrinkage rate or mechanical strength.

In the photocurable composition according to the present invention, the amount of the urethane (meth)acrylate oligomer is preferably 20 mass % or more, more preferably 30 mass % or more, and even more preferably 35 mass % or more, and is preferably 80 mass % or less, more preferably 60 mass % or less, and even more preferably 45 mass % or less.

If the amount of the urethane (meth)acrylate oligomer is more than 80 mass %, the viscosity of the photocurable composition is so high that the shaping by stereolithography becomes difficult. In addition, if the amount of the urethane (meth)acrylate oligomer is less than 20 mass %, the shaped product obtained by curing the photocurable composition has lowered mechanical strength.

2. Vinyl monomer

In the present invention, the "vinyl monomer" is a monomer having a radical polymerizable carbon-carbon double bond in the molecule. The vinyl monomer preferably includes a first monomer whose homopolymer has a glass transition temperature (Tg) of -100 °C or more and 20 °C or less, and a second monomer whose homopolymer has a glass transition temperature (Tg) of more than 20 °C and 150 °C or less. If the vinyl monomer includes the first monomer having the low glass transition temperature and the second monomer having the high glass transition temperature, the shaped product obtained by curing the photocurable composition has more excellent mechanical strength.

The glass transition temperature (Tg) of the first monomer is preferably - 100 °C or more, more preferably -70 °C or more, and even more preferably -50 °C or more, and is preferably 20 °C or less, more preferably 10 °C or less, even more preferably 0 °C or less, and most preferably -20 °C or less.

The glass transition temperature (Tg) of the second monomer is preferably more than 20 °C, more preferably 70 °C or more, even more preferably 80 °C or more, and most preferably 90 °C or more, and is preferably 150 °C or less, more preferably 130 °C or less, and even more preferably 110 °C or less.

When the total amount of the urethane (meth)acrylate oligomer and the vinyl monomer is 100 mass %, the amount of the first monomer is preferably 15 mass % or more, more preferably 30 mass % or more, and even more preferably 40 mass % or more, and is preferably 75 mass % or less, more preferably 60 mass % or less, and even more preferably 50 mass % or less. If the amount of the first monomer falls within the above range, a mechanical strength is imparted to the shaped product obtained by curing the photocurable composition while decreasing the glass transition temperature (Tg) of the shaped product.

When the total amount of the urethane (meth)acrylate oligomer and the vinyl monomer is 100 mass %, the amount of the second monomer is preferably 5 mass % or more, more preferably 10 mass % or more, and even more preferably 15 mass % or more, and is preferably 65 mass % or less, more preferably 50 mass % or less, and even more preferably 30 mass % or less. If the amount of the second monomer falls within the above range, increase in the glass transition temperature (Tg) of the shaped product obtained by curing the photocurable composition is suppressed while imparting a mechanical strength to the shaped product.

It is preferable that the amount of the first monomer and the amount of the second monomer are suitably chosen from the above range, respectively, so that the total amount of the urethane (meth)acrylate oligomer and the vinyl monomer becomes 100 mass %.

Specific examples of the vinyl monomer include an aromatic vinyl monomer, a vinyl monomer having a hydroxy group, a vinyl monomer having a carboxyl group, a vinyl monomer having a sulfonic group, a vinyl monomer having a phosphate group, a vinyl monomer having a tertiary amine, a vinyl monomer having a quaternary ammonium salt group, a vinyl monomer having a heterocycle, a vinyl amide, a vinyl monomer having an epoxy group, a vinyl carboxylate, an $\alpha$-olefin, a diene, and a (meth)acrylic monomer.

Examples of the vinyl monomer include a monofunctional monomer, and a multi-functional monomer (e.g. a difunctional monomer, a trifunctional monomer, a tetrafunctional monomer, etc.). Preferable examples of the vinyl monomer include the monofunctional monomer, the difunctional monomer, the trifunctional monomer and the tetrafunctional monomer, from the viewpoint of imparting excellent properties to the elastic shaped product obtained by curing the photocurable composition while having an appropriate viscosity for stereolithography. The monofunctional monomer is preferably used from the viewpoint of lowering the viscosity of the photocurable composition in the environment of room temperature. In addition, the multi-functional monomer is preferably used from the viewpoint of imparting excellent properties to the molded product.

The vinyl monomer preferably includes the (meth)acrylate from the viewpoint of having excellent photocuring reactivity while having an appropriate viscosity for stereolithography.

Preferable examples of the monofunctional monomer include a monofunctional (meth)acrylate. Specific examples of the monofunctional (meth)acrylate include ethoxylated nonylphenol acrylate, methyl-2-allyloxymethyl acrylate, m-phenoxybenzyl acrylate, phenoxyethyl (meth)acrylate, phenoxy-2-methylethyl (meth)acrylate, phenoxyethoxyethyl (meth)acrylate, 3-phenoxy-2-hydroxypropyl (meth)acrylate, 2-phenylphenoxyethyl (meth)acrylate, 4-phenylphenoxyethyl (meth)acrylate, 3-(2-phenylphenyl)-2-hydroxypropyl (meth)acrylate, ethylene oxide reacted p-cumylphenol (meth)acrylate, 2-bromophenoxyethyl (meth)acrylate, 2,4-dibromophenoxyethyl (meth)acrylate, 2,4,6-tribromophenoxyethyl (meth)acrylate, several moles of ethylene oxide or propylene oxide modified phenoxy (meth)acrylate, isobornyl (meth)acrylate, bornyl (meth)acrylate, tricyclodecanyl (meth)acrylate, dicyclopentanyl (meth)acrylate, dicyclopentenyl (meth)acrylate, cyclohexyl (meth)acrylate, 4-butylcyclohexyl (meth)acrylate, acryloyl morpholine, 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, amyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxydiethylene glycol (meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, methoxypolypropylene glycol (meth)acrylate, diacetone (meth)acrylamide, isobutoxymethyl (meth)acrylamide, N,N-dimethyl (meth)acrylamide, t-octyl (meth)acrylamide, dimethylaminoethyl (meth)acrylate, diethylaminoethyl (meth)acrylate, 7-amino-3,7-dimethyloctyl (meth)acrylate, N,N-diethyl (meth)acrylamide, N,N-dimethylaminopropyl (meth)acrylamide, hydroxybutylvinyl ether, laurylvinyl ether, cetylvinyl ether, 2-ethylhexylvinyl ether, polyoxyethylene nonylphenyl ether (meth)acrylate, and vinyl monomer (e.g. N-vinylpyrrolidone, N-vinylcaprolactam, vinylimidazole, and vinylpyridine).

In addition, specific examples of the multi-functional (meth)acrylate include polyethylene glycol di(meth)acrylate, dipropylene glycol diacrylate, propoxylated pentyl glycol diacrylate, propoxylated glyceryl triacrylate, trimethylolpropane tri(meth)acrylate, pentaerythritol tri(meth)acrylate, pentaerythritol tetra(meth)acrylate, ethylene glycol di(meth)acrylate, tetraethylene glycol di(meth)acrylate, polypropylene glycol di(meth)acrylate, 1,4-butanediol di(meth)acrylate, 1,6-hexanediol di(meth)acrylate, neopentyl glycol di(meth)acrylate, trimethylolpropanetrioxyethyl (meth)acrylate, tris(2-hydroxyethyl) isocyanurate tri(meth)acrylate, tris(acryloyloxy) isocyanurate, bis(hydroxymethyl)tricyclodecane di(meth)acrylate, dipentaerythritol hexa(meth)acrylate, di(meth)acrylate of a diol which is an addition product of bisphenol A with polyethylene oxide or propylene oxide, di(meth)acrylate of a diol which is an addition product of hydrogenated bisphenol A with polyethylene oxide or propylene oxide, epoxy (meth)acrylate obtained by an addition reaction between diglycidyl ether of bisphenol A and (meth)acrylate, and triethylene glycol divinyl ether.

For the glass transition temperature (Tg) of the vinyl monomer, for example, the glass transition temperature disclosed at the following websites can be referred to.

https://www.saiden-chem.co.jp/t_sekkei_ema.html
https://www.kyoeisha.co.jp/product/kinou/lightester.php
https://www.kyoeisha.co.jp/product/kinou/lightacrylate.php
https://www.nitto.com/jp/ja/rd/base/adhesive/specificat/

Examples of the first monomer having the glass transition temperature (Tg) of -100 °C or more and 20 °C or less include methyl acrylate (8 °C), ethyl acrylate (-24 °C), 2-ethylhexyl acrylate (-70 °C), 2-ethylhexyl methacrylate (-10 °C), isodecyl methacrylate (-41 °C), n-lauryl methacrylate (-65 °C), 2-hydroxyethyl acrylate (-15 °C), 2-hydroxypropyl acrylate (-7 °C), phenoxyethyl acrylate (-22 °C), lauryl acrylate (-3 °C), isoamyl acrylate (-45 °C), butyl acrylate (-55 °C), ethyl acrylate (-24 °C), ethoxydiethylene glycol acrylate (-70 °C), methoxy-triethylene glycol acrylate (-50 °C), and (2-methyl-2-ethyl-1,3-dioxolane-4-yl) methyl acrylate (-7 °C).

Examples of the second monomer having the glass transition temperature (Tg) of more than 20 °C and 150 °C or less include isobornyl acrylate (97 °C), t-butyl methacrylate (107 °C), methyl methacrylate (105 °C), acrylamide (165 °C), styrene (100 °C), acrylic acid (106 °C), and acrylonitrile (97 °C).

The photocurable composition according to the present invention preferably contains a photopolymerization initiator. If the photopolymerization initiator is contained, curing of the above described photocurable composition is accelerated. The photopolymerization initiator is not particularly limited, and a conventional photopolymerization initiator that generates radical by light irradiation is used.

Examples of the photopolymerization initiator include an alkylphenone-based photopolymerization initiator such as 2-hydroxy-2-methylpropiophenone, 2,2-dimethoxy-2-phenylacetophenone, 1-hydroxycyclohexylphenyl ketone, 2-hydroxy-4'-(2-hydroxyethoxy)-2-methylpropiophenone, 2-(4-(methylthio)benzoyl)-2-(4-morpholinyl)propane, 2-(dimethylamino)-1-(4-morpholinophenyl)-2-benzyl-1-butanone, and 2-(dimethylamino)-2-(4-methylbenzyl)-1-(4-morpholinophenyl)butane-1-one; an acylphosphine oxide-based photopolymerization initiator such as bis(2,4,6-trimethylbenzoyl) phenylphosphine oxide, and 2,4,6-trimethylbenzoyl diphenylphosphine oxide; and an oxime ester-based photopolymerization initiator such as 1,2-octanedione, 1-(4-(phenylthio)-, 2-(O-benzoyloxime)), ethanone, 1-(9-ethyl-6-(2-methylbenzoyl)-9H-carbazol-3-yl)-, and 1-(O-acetyloxime).

In the stereolithography, a light source having a peak of light intensity in a wavelength range of 390 nm to 410 nm, in particular, a light source having a peak of light intensity at a wavelength of 405 nm, is mainly used. The photopolymerization initiator initiating the radical polymerization of the photocurable composition by irradiating the light from such light source is preferable. The photopolymerization initiator may be used solely, or at least two of them may be used in combination.

In the stereolithography using the above described light source, the photocurable composition according to the present invention preferably contains at least two photopolymerization initiators having different absorption bands, from the viewpoint of suitably curing the photocurable composition. For example, a photopolymerization initiator having an absorption band at the wavelength region of 405 nm, and a photopolymerization initiator having an absorption band in the wavelength region of 300 nm to 380 nm are preferably used in combination. In the present invention, as the photopolymerization initiator, the alkylphenone-based photopolymerization initiator and the acylphosphine oxide-based photopolymerization initiator are preferably used in combination.

The amount of the photopolymerization initiator is preferably 1 part by mass or more, more preferably 1.5 parts by mass or more, even more preferably 2 parts by mass or more, and is preferably 30 parts by mass or less, more preferably 20 parts by mass or less, even more preferably 10 parts by mass or less, most preferably 5 parts by mass or less, with respect to 100 parts by mass of the total amount of the urethane (meth)acrylate oligomer and the vinyl monomer.

In case of using the alkylphenone-based photopolymerization initiator and the acylphosphine oxide-based photopolymerization initiator in combination, a mass ratio of the the alkylphenone-based photopolymerization initiator to the acylphosphine oxide-based photopolymerization initiator (the alkylphenone-based / the acylphosphine oxide-based) is preferably 0.2 or more, more preferably 0.5 or more, even more preferably 0.8 or more, and is preferably 5 or less, more preferably 3 or less, even more preferably 2 or less.

The photocurable composition according to the present invention may contain a silane coupling agent. When the photocurable composition according to the present invention contains a filler, the interfacial strength between the filler and the polymer component is greater. As a result, the improvement effect in properties by the filler is increased.

The silane coupling agent is not particularly limited, and examples thereof include an alkylalkoxy silane such as methyltrimethoxy silane, dimethyldimethoxy silane, dimethyldiethoxy silane, and triethoxy-n-octyl silane; a vinyl silane such as vinyltrimethoxy silane, and vinyltriethoxy silane; an amino silane such as γ-aminopropyltriethoxy silane, N-(β-aminoethyl)-γ-aminopropyltrimethoxy silane, and N-(β-aminoethyl)-γ-aminopropylmethyldimethoxy silane; an epoxy silane such as γ-glycidoxypropyltrimethoxy silane, and β-glycidoxypropylmethyldimethoxy silane; a methacryloxy silane such as γ-methacryloxypropyltrimethoxy silane, and γ-methacryloxypropylmethyldimethoxy silane; and a mercapto silane such as γ-mercaptopropyltrimethoxy silane (3-mercaptopropyltrimethoxy silane).

The photocurable composition according to the present invention may further contain various additives as long as these additives do not impair the effect of the present invention. Examples of the additive include a dilution polymer, photosensitizer, filler, UV screening agent, dye, pigment, leveling agent, fluidity modifier, antifoaming agent, plasticizer, polymerization inhibitor, flame retardant, dispersion stabilizer, storage stabilizer, antioxidant, metal, metal oxide, metal salt, and ceramic. One kind of or at least two kinds of the additives may be contained in the photocurable composition.

As the filler, silica is preferable. The amount of the filler is preferably 1 part by mass or more, more preferably 5 parts by mass or more, and is preferably 50 parts by mass or less, more preferably 30 parts by mass or less, with respect to 100 parts by mass of the total amount of the urethane (meth)acrylate oligomer and the vinyl monomer. If the amount of the filler falls within the above range, a mechanical strength can be imparted to the shaped product obtained by curing the photocurable composition while suppressing increase in the viscosity of the photocurable composition.

The viscosity of the photocurable composition according to the present invention, as measured using an E type viscometer under conditions of a cone plate diameter: 25 mm and a shear rate: $100 \text{ s}^{-1}$ in an environment of a temperature: 25 °C and a relative humidity: 50%, is preferably 100 mPa·s or more, more preferably 500 mPa·s or more, and even more preferably 1,000 mPa·s or more, and is preferably 6,000 mPa·s or less, more preferably 3,000 mPa·s or less, and even more preferably 1,500 mPa·s or less. If the viscosity of the photocurable composition falls within the above range, an elasticity can be imparted to the shaped product obtained by curing the photocurable composition while having an appropriate viscosity for the stereolithography in an environment of room temperature. In addition, if the viscosity of the photocurable composition falls within the above range, the processability is better.

The photocurable composition according to the present invention is suitably used for stereolithography.

<Production method of shaped product>

The present invention also provides a method for producing an object in a three dimensional shape by stereolithography, comprising a step of irradiating light to a photocurable composition to cure the photocurable composition, and forming the cured photocurable composition into an object in a three dimensional shape.

As the production method of the shaped product according to the present invention, for example, the stereolithography in various modes, such as SLA mode (stereolithography laser mode: Stereolithography Apparatus), DLP mode (stereolithography projector (surface exposure) mode: Digital Light Processing), and LCD mode (stereolithography liquid display mode: Liquid Crystal Display), can be adopted.

The shaped product according to the present invention is suitably produced, for example, by a method comprising: a step of supplying a photocurable composition on a lithography table, irradiating light to the photocurable composition, curing the photocurable composition to form a first layer of the cured photocurable composition, a step of supplying the photocurable composition on the first layer, irradiating light to the photocurable composition, curing the photocurable composition to form a second layer of the cured photocurable composition, repeating the same step as the step of forming the second layer until forming a $N^{th}$ layer to form an shaped object in a three dimensional shape (stereolithography product). In the stereolithography, a conventional 3D printer is used. As the 3D printer, a commercially available 3D printer can be used.

In the stereolithography, the thickness of a single layer when curing the photocurable composition is preferably, for example, about 0.01 mm to 0.5 mm. Further, the irradiating light is generally ultraviolet light, and preferably includes a light having a wavelength of 405 nm. In addition, the illuminance intensity of the irradiating light is preferably about 0.1 $mW/cm^2$ to 100 $mW/cm^2$ at the measuring wavelength region of 405 nm. The light irradiation time when curing a single layer of the photocurable composition varies depending on the mode of the stereolithography, and is suitably adjusted. For example, in the case of DLP mode, the light irradiation time is about 1 second to 60 seconds. The shaped product according to the present invention is preferably produced in an environment of about room temperature (e.g. 20 °C to 30 °C).

In addition, after the above described stereolithography, a conventional secondary treatment, such as high pressure mercury lamp irradiation, metal halide lamp irradiation, UV-LED irradiation, and heating may be further conducted where necessary. These secondary treatments modify the surface, improve the strength, or accelerate the curing after shaping. The secondary treatment may be conducted in combination with the stereolithography, although the secondary treatment is not always necessary depending on the stereolithography conditions.

(Shaped product and cured product)

The present invention further includes a cured product or shaped product obtained by curing the photocurable composition according to the present invention.

Curing the photocurable composition according to the present invention provides a cured product or shaped product having a low glass transition temperature (Tg). The glass transition temperature (Tg) of the cured product or shaped product of the photocurable composition according to the present invention is preferably - 70 °C or more, more preferably -60 °C or more, and even more preferably -50 °C or more, and is preferably 20 °C or less, more preferably 10 °C or less, and even more preferably 0 °C or less. If the glass transition temperature (Tg) of the cured product or shaped product of the photocurable composition falls within the above range, the mechanical strength and the elasticity is imparted to the cured product or shaped product that are obtained by curing.

The cured product or shaped product according to the present invention preferably has rubber elasticity as the mechanical property. The cured product or shaped product according to the present invention preferably has, for example, the following mechanical properties.

The hardness of the cured product or shaped product according to the present invention is preferably 10 or more, more preferably 20 or more, and even more preferably 30 or more, and is preferably 100 or less, more preferably 90 or less, and even more preferably 80 or less, in Shore A hardness. If the hardness of the cured product or shaped product according to the present invention falls within the above range, the cured product or shaped product according to the present invention becomes a substitution for a product required to have a rubber elasticity.

The tensile strength at break of the cured product or shaped product according to the present invention is preferably 0.5 MPa or more, more preferably 1 MPa or more, and even more preferably 2 MPa or more, and is preferably 30 MPa or less, more preferably 25 MPa or less, and even more preferably 20 MPa or less. If the tensile strength at break of the cured product or shaped product according to the present invention falls within the above range, the cured product or shaped product according to the present invention becomes a substitution for a product required to have a rubber elasticity.

The tensile elongation at break of the cured product or shaped product according to the present invention is preferably 100% or more, more preferably 150% or more, and even more preferably 200% or more. If the tensile elongation at break of the cured product or shaped product according to the present invention falls within the above range, the cured product or shaped product according to the present invention becomes a substitution for a product required to have a rubber elasticity.

The compression set (permanent compression strain) of the cured product or shaped product according to the present invention is preferably 5% or less, more preferably 3% or less, and even more preferably 1% or less. If the compression set of the cured product or molded product according to the present invention falls within the above range, the cured product or shaped product according to the present invention can become a substitution for a product required to have a rubber elasticity.

The repeated fatigue (times/mm) of the cured product or shaped product according to the present invention is preferably 5000 or more, more preferably 6000 or more, and even more preferably 7000 or more. If the repeated fatigue of the cured product or molded product according to the present invention falls within the above range, the cured product or molded product according to the present invention can become a substitution for a product required to have a rubber elasticity.

**EXAMPLES**

Next, the present invention will be described in detail by way of examples. However, the present invention is not limited to the examples described below. Various changes and modifications without departing from the spirit of the present invention are included in the scope of the present invention.

1. Evaluation method

(Viscosity of photocurable composition)

The viscosity of the photocurable composition was measured using an E type viscometer (MCR301 available from Anton-Paar Inc.) under conditions of a cone plate diameter: 25 mm and a shear rate: 100 s$^{-1}$ in an environment of a temperature: 25 °C (accuracy: $\pm$ 2 °C) and a relative humidity: 50%.

(Glass transition temperature Tg of cured product (shaped product))

The glass transition temperature Tg of the cured product (shaped product) obtained by curing the photocurable composition was measured using a differential scanning calorimeter (DSC7000X available from Hitachi High-Tech Science Corporation), based on the method prescribed in JIS K6240: 2011.

(Hardness of cured product (shaped product))

The Shore A hardness of the cured product (shaped product) (compression test sample of $\varphi$ 29 $\times$ 12.5 mm prescribed in JIS K6262: 2013) obtained by curing the photocurable composition was measured based on the method prescribed in JIS K6253-3: 2012.

(Tensile test of cured product (shaped product))

The tensile strength at break and tensile elongation at break of the cured product (shaped product) (dumbbell-shaped test piece No. 3 prescribed in JIS K6251: 2017) obtained by curing the photocurable composition were measured based on the method prescribed in JIS K6251: 2017. A greater value of the tensile strength at break means the cured product (shaped product) has higher strength, and a greater value of the tensile elongation at break means the cured product (shaped product) elongates more easily and has better mechanical properties.

(Compression set (permanent compression strain))

The cured product (shaped product) (compression test sample of $\varphi$ 29 $\times$ 12.5 mm prescribed in JIS K6262: 2013) obtained by curing the photocurable composition was compressed in a compression rate of 25% at a temperature of 23 °C for 22 hours based on the method prescribed in JIS K6262: 2013, and the compression set was measured in 0.5 hour later after removing the compression. A smaller value of the compression set means the cured product (shaped product) has better restoring force.

(Repeated fatigue test)

A repeated fatigue test was conducted using a De Mattia Flexing Tester based on the method prescribed in JIS K6260: 2017 for the cured product (shaped product) (test piece (dimensions: length 150 mm, width 25 mm, curvature radius of central groove 2.38 mm, and thickness 6.3 mm) prescribed in JIS K6260: 2017) obtained by curing the photocurable composition. A notch was made in the central groove of the test piece, and the test piece was subjected to repeated flexing at 5 Hz and a strain of 50 %, the degree of the crack growth of the central groove was measured. The crack growth (times/mm) is calculated based on the following expression. The number of flexing times required for the crack to grow to 1 mm was recorded. A greater value means that more time is spent for the crack to grow to 1 mm and that the repeated fatigue test result (flexing crack growth resistance) is better.

Crack growth (times/mm) = number of flexing times (times)/crack length (mm)

2. Production of photocurable composition

According to the formulations (parts by mass) shown in Tables 1 and 2, the following materials were mixed and defoamed with a planetary centrifugal mixer (revolution and rotation type), to prepare the photocurable compositions. The viscosity of the prepared photocurable compositions was measured, and the results are shown in Tables 1 and 2. All the components were mixed uniformly. In Tables 1 and 2, "-" means that this component is not contained.

The following materials were used as the materials in Tables 1, 2.

·Urethane (meth)acrylate oligomer 1: EBECRYL230 (aliphatic urethane acrylate oligomer, number average molecular weight: 5,000, viscosity at 25 °C: 40,000 mPa·s, glass transition temperature:-55 °C) available from Daicel Allnex Co. Ltd.
·Urethane (meth)acrylate oligomer 2: EBECRYL9270 (aliphatic urethane acrylate oligomer (low viscosity type), number average molecular weight: 1,000, viscosity at 25 °C: 7,500 mPa·s, glass transition temperature: 2 °C) available from Daicel Allnex Co. Ltd.

·Second monomer: IBXA (isobornyl acrylate, molecular weight: 208.3, viscosity at 25 °C: 7.7 mPa·s, glass transition temperature: 97 °C) available from Osaka Organic Chemical Industry Ltd.

·First monomer A: MEDOL-10 (2-methyl-2-ethyl-1,3-dioxolane-4-yl)methyl acrylate, molecular weight: 200.2, viscosity at 25 °C: 5.1 mPa·s, glass transition temperature:-7 °C) available from Osaka Organic Chemical Industry Ltd.

·First monomer B: 2-ethylhexyl acrylate (molecular weight: 184.3, viscosity at 25 °C: 3 mPa·s, glass transition temperature:-70 °C) available from Tokyo Kasei Kogyo Co., Ltd.

·Photopolymerization initiator 1: Omnirad819 (acylphosphine oxide-based photopolymerization initiator, phenyl-bis(2,4,6-trimethylbenzoyl)phosphine oxide, molecular weight: 418.5) available from BASF Ltd.

·Photopolymerization initiator 2: Omnirad1173 (alkylphenone-based photopolymerization initiator, 2-hydroxy-2-methylpropiophenone, molecular weight: 164.2, viscosity at 25 °C: 25 mPa·s) available from BASF Ltd.

·Silica: Nipsil KQ (amorphous silicon dioxide, primary particle size: 14 nm, BET specific surface area: 220 $m^2/g$) available from Tosoh Corporation

·Silane coupling agent: Triethoxy-n-octylsilane (silicon compound alkyl silane, molecular weight: 276.5) available from Tokyo Kasei Kogyo Co., Ltd.

Table 1

| Photocurable composition No. | | 1 | 2 | 3 | 4 | 5 | 6 | 7 | 8 | 9 | 10 | 11 |
|---|---|---|---|---|---|---|---|---|---|---|---|---|
| Urethane (meth)acrylate oligomer 1 | | 50 | 50 | 40 | 40 | 40 | 35 | 30 | 20 | 20 | 20 | 20 |
| Urethane (meth)acrylate oligomer 2 | | 30 | 30 | - | - | - | 5 | 10 | - | - | - | - |
| Second vinyl monomer (Tg: 97 °C) | | 5 | 5 | 15 | 15 | 15 | 15 | 15 | 5 | 5 | 65 | 65 |
| First vinyl monomer A (Tg:-7 °C) | | 15 | 15 | 45 | - | 45 | 45 | 45 | 75 | 75 | - | - |
| First vinyl monomer B (Tg:-70 °C) | | - | - | - | 45 | - | - | - | - | - | 15 | 15 |
| Photopolymerization initiator 1 | | 1 | 1 | 1 | 1 | 1 | 1 | 1 | 1 | 1 | 1 | 1 |
| Photopolymerization initiator 2 | | 1.5 | 1.5 | 1.5 | 1.5 | 1.5 | 1.5 | 1.5 | 1.5 | 1.5 | 1.5 | 1.5 |
| Filler (silica) | | - | 5.0 | - | - | 5.0 | - | - | - | 5.0 | - | 5.0 |
| Silane coupling agent | | - | 0.6 | - | - | 0.6 | - | - | - | 0.6 | - | 0.6 |
| Tg of cured product of photocurable composition (°C) | | 12 | 13 | 6 | -25 | 7 | 10 | 12 | 5 | 7 | 18 | 20 |
| Viscosity of photocurable composition (mPa·s) | | 5,600 | 6,000 | 2,000 | 1,900 | 3,000 | 1,800 | 1,500 | 500 | 1,000 | 700 | 1,200 |
| Properties of cured product | Hardness (Shore A) | 30 | 35 | 25 | 20 | 35 | 20 | 21 | 15 | 25 | 50 | 60 |
| | Tensile strength at break (MPa) | 1.0 | 3.0 | 1.0 | 0.5 | 2.5 | 1.0 | 1.0 | 0.6 | 0.9 | 3.0 | 4.0 |
| | Tensile elongation at break (%) | 200 | 250 | 180 | 150 | 220 | 200 | 250 | 160 | 180 | 150 | 170 |
| | Compression set (%) | 2.7 | 3.6 | 2.6 | 2.7 | 2.8 | 2.7 | 2.7 | 3.1 | 3.2 | 3.4 | 3.7 |
| | Repeated fatigue (crack growth (times/mm)) | 6,000 | 6,000 | 7,000 | 7,000 | 6,000 | 7,000 | 7,000 | 5,000 | 5,000 | 5,000 | 5,000 |
| Formulation: parts by mass | | | | | | | | | | | | |

EP 4 741 430 A2

Table 2

| Photocurable composition No. | 12 | 13 | 14 | 15 | 16 | 17 | 18 | 19 | 20 | 21 | 22 | 23 |
|---|---|---|---|---|---|---|---|---|---|---|---|---|
| Urethane (meth)acrylate oligomer 1 | 100 | - | - | - | - | 80 | 10 | 85 | 30 | 10 | 30 | 10 |
| Urethane (meth)acrylate oligomer 2 | - | 100 | - | - | - | - | - | - | - | - | - | - |
| Second vinyl monomer (Tg: 97 °C) | - | - | 100 | - | - | 5 | 25 | 5 | 65 | 10 | 1 | 70 |
| First vinyl monomer A (Tg:-7 °C) | - | - | - | 100 | - | 15 | 65 | 10 | - | - | - | - |
| First vinyl monomer B (Tg:-70 °C) | - | - | - | - | 100 | - | - | - | 5 | 80 | 69 | 20 |
| Photopolymerization initiator 1 | 1 | 1 | 1 | 1 | 1 | 1 | 1 | 1 | 1 | 1 | 1 | 1 |
| Photopolymerization initiator 2 | 1.5 | 1.5 | 1.5 | 1.5 | 1.5 | 1.5 | 1.5 | 1.5 | 1.5 | 1.5 | 1.5 | 1.5 |
| Filler (silica) | - | - | - | - | - | - | - | - | - | - | - | - |
| Silane coupling agent | - | - | - | - | - | - | - | - | - | - | - | - |
| Tg of cured product of photocurable composition (°C) | -55 | 2 | 97 | -10 | -70 | -10 | 20 | -50 | 40 | -30 | -40 | 50 |
| Viscosity of photocurable composition (mPa·s) | 40,000 | 7,500 | 7.7 | 5.1 | 3 | 10,000 | 400 | 15,000 | 900 | 300 | 800 | 500 |
| Properties of cured product | Hardness (Shore A) | - | - | Poorly cured | | | 50 | 10 | 55 | 60 | 10 | 15 | 70 |
| | Tensile strength at break (MPa) | 1.0 | 8.0 | | | | 0.7 | 0.1 | 1.1 | 5 | 0.2 | 0.2 | 6 |
| | Tensile elongation at break (%) | 83 | 34 | | | | 130 | 50 | 90 | 60 | 40 | 50 | 50 |
| | Compression set (%) | Failed to be produced | | | | | 3 | 10 | Failed to be produced | 10 | 10 | 10 | 10 |
| | Repeated fatigue (crack growth (times/mm)) | | | | | | 6,000 | 3,000 | | 3000 | 3,000 | 3,000 | 3,000 |
| Formulation: parts by mass | | | | | | | | | | | | | |

EP 4 741 430 A2

13

3. Production of shaped product

The shaped product was shaped from the photocurable composition by stereolithography in a DLP mode. Specifically, the shaped product was shaped using a 3D printer provided with a light source (UV-LED) having a peak wavelength of 405 nm, under conditions of temperature: 23 °C, laminating pitch: 0.05 mm, irradiation time per layer: 20 seconds, and illuminance intensity at the wavelength of 405 nm: 5.0 mW/cm$^2$. The shaped products were produced in three shapes, respectively. The first one is the dumbbell-shaped test piece No. 3 prescribed in JIS K6251: 2017, used for the above described tensile test. The second one is the compression test sample of $\varphi$ 29 $\times$ 12.5 mm prescribed in JIS K6262: 2013, used for the above described hardness and compression set measurements. The third one is the test piece (dimensions: length 150 mm, width 25 mm, curvature radius of central groove 2.38 mm, and thickness 6.3 mm) prescribed in JIS K6260: 2017, used for the above described repeated fatigue test.

The measured results of hardness, tensile strength at break, tensile elongation at break, compression set and repeated fatigue test for the obtained shaped products are shown in Tables 1 and 2.

It is apparent from the results of Tables 1 and 2 that a shaped product having excellent mechanical properties is formed from the photocurable composition according to the present invention containing a urethane (meth)acrylate oligomer and a vinyl monomer, wherein the vinyl monomer includes a first monomer having a glass transition temperature (Tg) of -100 °C or more and 20 °C or less, and a second monomer having a glass transition temperature (Tg) of more than 20 °C and 150 °C or less, an amount of the urethane (meth)acrylate oligomer ranges from 20 mass % to 80 mass %, an amount of the first monomer ranges from 15 mass % to 75 mass %, an amount of the second monomer ranges from 5 mass % to 65 mass %, and a total amount of the urethane (meth)acrylate oligomer and the vinyl monomer is 100 mass %. The photocurable composition according to the present invention is suitably used for stereolithography.

The photocurable composition No. 17 has a high viscosity and thus failed to be shaped into an object in a three dimensional shape under the above described conditions. However, the shaped product was obtained by increasing the liquid temperature of the composition in a range from 40 °C to 80 °C to decrease the apparent viscosity, or by changing the general stage elevating distance for producing a single layer to about 10 times to conduct the layer forming at a 1/10 speed. It is noted that if a commercially available 3D printer is used directly, a shaped product is hardly produced under such conditions. In addition, since the upper limit value of the adjustable temperature in the commercially available 3D printer is about 30 °C, the photocurable composition No. 17 is hardly shaped by stereolithography with the commercially available 3D printer.

The photocurable composition according to the present invention is suitably used for stereolithography.

The present invention (1) is a photocurable composition containing a urethane (meth)acrylate oligomer and a vinyl monomer, wherein the vinyl monomer includes a first monomer having a glass transition temperature (Tg) of -100 °C or more and 20 °C or less, and a second monomer having a glass transition temperature (Tg) of more than 20 °C and 150 °C or less, an amount of the urethane (meth)acrylate oligomer ranges from 20 mass % to 80 mass %, an amount of the first monomer ranges from 15 mass % to 75 mass %, an amount of the second monomer ranges from 5 mass % to 65 mass %, and a total amount of the urethane (meth)acrylate oligomer and the vinyl monomer is 100 mass %.

The present invention (2) is the photocurable composition according to the present invention (1), wherein the urethane (meth)acrylate oligomer has a (meth)acryloyl group.

The present invention (3) is the photocurable composition according to the present invention (1) or (2), wherein the urethane (meth)acrylate oligomer has a glass transition temperature (Tg) ranging from -100 °C to 50 °C.

The present invention (4) is the photocurable composition according to any one of the present inventions (1) to (3), wherein the vinyl monomer includes at least one member selected from the group consisting of a monofunctional vinyl monomer, a difunctional vinyl monomer, a trifunctional vinyl monomer, and a tetrafunctional vinyl monomer.

The present invention (5) is the photocurable composition according to any one of the present inventions (1) to (4), wherein the vinyl monomer includes (meth)acrylate.

The present invention (6) is the photocurable composition according to any one of the present inventions (1) to (5), wherein the first monomer includes 2-ethylhexyl acrylate and/or (2-methyl-2-ethyl-1,3-dioxolane-4-yl) methacylate.

The present invention (7) is the photocurable composition according to any one of the present inventions (1) to (6), wherein the second monomer includes isobornyl acrylate

The present invention (8) is the photocurable composition according to any one of the present inventions (1) to (7), wherein the photocurable composition has a viscosity of 6,000 mPa·s or less as measured at a temperature of 25 °C and a shear rate of 100 s$^{-1}$.

The present invention (9) is the photocurable composition according to any one of the present inventions (1) to (8), wherein the photocurable composition is for stereolithography.

The present invention (10) is a cured product of the photocurable composition according to any one of the present inventions (1) to (9), wherein the cured product has a glass transition temperature (Tg) of 20 °C or less.

The present invention (11) is a shaped product obtained by curing the photocurable composition according to any one of the present inventions (1) to (9).

The present invention (12) is a method for producing an object in a three dimensional shape, comprising a step of irradiating light to the photocurable composition according to any one of the present inventions (1) to (9), curing the photocurable composition and forming the photocurable composition into an object in a three dimensional shape.

This application is based on Japanese Patent application No. 2021-153498 filed on September 21, 2021, the content of which is hereby incorporated by reference.

## Claims

1. A photocurable composition for stereolithography containing a urethane (meth)acrylate oligomer and a vinyl monomer, wherein

   the vinyl monomer includes a first monomer whose homopolymer has a glass transition temperature (Tg) of -100 °C or more and 20 °C or less, and a second monomer whose homopolymer has a glass transition temperature (Tg) of more than 20 °C and 150 °C or less,
   an amount of the urethane (meth)acrylate oligomer ranges from 20 mass % to 80 mass %,
   an amount of the first monomer ranges from 15 mass % to 75 mass %,
   an amount of the second monomer ranges from 5 mass % to 65 mass %,
   a total amount of the urethane (meth)acrylate oligomer and the vinyl monomer is 100 mass %, and
   a compression set of the cured product obtained by curing the photocurable composition is 5% or less, when measured as follows: the cured product is compressed in a compression rate of 25% at a temperature of 23 °C for 22 hours based on the method prescribed in JIS K6262: 2013, and the compression set is measured in 0.5 hour later after removing the compression.

2. The photocurable composition according to claim 1, wherein the urethane (meth)acrylate oligomer has a (meth) acryloyl group.

3. The photocurable composition according to claim 1 or 2, wherein the urethane (meth)acrylate oligomer has a glass transition temperature (Tg) ranging from -100 °C to 50 °C.

4. The photocurable composition according to any one of claims 1 to 3, wherein the vinyl monomer includes at least one member selected from the group consisting of a monofunctional vinyl monomer, a difunctional vinyl monomer, a trifunctional vinyl monomer, and a tetrafunctional vinyl monomer.

5. The photocurable composition according to any one of claims 1 to 4, wherein the vinyl monomer includes (meth) acrylate.

6. The photocurable composition according to any one of claims 1 to 5, wherein the first monomer includes 2-ethylhexyl acrylate and/or (2-methyl-2-ethyl-1 ,3-dioxolane-4-yl) methacrylate.

7. The photocurable composition according to any one of claims 1 to 6, wherein the second monomer includes isobornyl acrylate.

8. The photocurable composition according to any one of claims 1 to 7, wherein the photocurable composition has a viscosity of 100 mPa·s or more and 6,000 mPa·s or less as measured at a temperature of 25 °C and a shear rate of 100 s$^{-1}$.

9. A cured product of the photocurable composition according to any one of claims 1 to 8, wherein the cured product has a glass transition temperature (Tg) measured as specified in the description and of 20 °C or less.

10. A method for producing an object in a three dimensional shape by stereolithography, comprising a step of irradiating light to a photocurable composition to cure the photocurable composition, and forming the cured photocurable composition into an object in a three dimensional shape, wherein

    the photocurable composition contains a urethane (meth)acrylate oligomer and a vinyl monomer,
    the vinyl monomer includes a first monomer whose homopolymer has a glass transition temperature (Tg) of -100 °C or more and 20 °C or less, and a second monomer whose homopolymer has a glass transition temperature (Tg) of more than 20 °C and 150 °C or less,

an amount of the urethane (meth)acrylate oligomer ranges from 20 mass % to 80 mass %,

an amount of the first monomer ranges from 15 mass % to 75 mass %,

an amount of the second monomer ranges from 5 mass % to 65 mass %,

a total amount of the urethane (meth)acrylate oligomer and the vinyl monomer is 100 mass %, and

a compression set of the cured product obtained by curing the photocurable composition is 5% or less, when measured as follows: the cured product is compressed in a compression rate of 25% at a temperature of 23 °C for 22 hours based on the method prescribed in JIS K6262: 2013, and the compression set is measured in 0.5 hour later after removing the compression.

11. The method for producing the object in the three dimensional shape according to claim 10, wherein the urethane (meth)acrylate oligomer has a (meth)acryloyl group.

12. The method for producing the object in the three dimensional shape according to claim 10 or 11, wherein the first monomer includes 2-ethylhexyl acrylate and/or (2-methyl-2-ethyl-1,3-dioxolane-4-yl) methacrylate.

13. The production method of the molded product according to any one of claims 10 to 12, wherein the second monomer includes isobornyl acrylate.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017154335 A
- JP 2021075044 A
- JP 2021153498 A

**Non-patent literature cited in the description**

- *JIS K6240*, 2011
- *JIS K6262*, 2013
- *JIS K6253-3*, 2012
- *JIS K6251*, 2017
- *JIS K6260*, 2017